# EUROPEAN PATENT SPECIFICATION

(11) **EP 4 156 326 B1**
(45) Date of publication and mention of the grant of the patent: **29.04.2026**
(21) Application number: 22816331.7
(22) Date of filing: 09.05.2022
(51) Int. Cl.: H01M 4/36, H01M 10/052, H01M 4/134, H01M 4/1395, H01M 4/38

(54) **LITHIUM ELECTRODE AND LITHIUM SECONDARY BATTERY COMPRISING SAME**
LITHIUMELEKTRODE UND LITHIUMSEKUNDÄRBATTERIE DAMIT
ÉLECTRODE AU LITHIUM ET BATTERIE SECONDAIRE AU LITHIUM LA COMPRENANT

(30) Priority: 02.06.2021 KR 20210071605
(43) Date of publication of application: 29.03.2023
(73) Proprietor: LG Energy Solution, Ltd., Seoul 07335 (KR)
(72) Inventor: KIM, Myeongseong, Daejeon 34122 (KR); KIM, Yunjung, Daejeon 34122 (KR); KIM, Soohyun, Daejeon 34122 (KR); KIM, Kihyun, Daejeon 34122 (KR)
(74) Representative: Goddar, Heinz J.
(86) International application number: PCT/KR2022/006532
(87) International publication number: WO 2022/255672

(56) References cited:
- EP-A1- 3 761 437
- KR-A- 20130 128 273
- KR-A- 20190 033 922
- KR-A- 20190 117 275
- KR-A- 20200 012 169
- YANG QIULI ET AL: "PIM-1 as an artificial solid electrolyte interphase for stable lithium metal anode in high-performance batteries", JOURNAL OF ENERGY CHEMISTRY, ELSEVIER, AMSTERDAM, NL, vol. 42, 21 June 2019 (2019-06-21), pages 83 - 90, XP085914453, ISSN: 2095-4956, [retrieved on 20190621], DOI: 10.1016/J.JECHEM.2019.06.012
- YANG QIULI; LI WENLI; DONG CHEN; MA YUYAN; YIN YUXIN; WU QIBING; XU ZHITAO; MA WEI; FAN CHENG; SUN KENING: "PIM-1 as an artificial solid electrolyte interphase for stable lithium metal anode in high-performance batteries", JOURNAL OF ENERGY CHEMISTRY, vol. 42, 21 June 2019 (2019-06-21), AMSTERDAM, NL , pages 83 - 90, XP085914453, ISSN: 2095-4956, DOI: 10.1016/j.jechem.2019.06.012

## Description

### [Technical Field]

The present invention relates to a lithium electrode and a lithium secondary battery comprising the same.

### [Background Art]

As the utilization range of lithium secondary batteries is expanded not only to portable electronic devices and communication devices, but also to electric vehicles (EV) and electric storage systems (ESS), the demand for high capacity and high energy density of lithium secondary batteries used as their power sources is increasing.

Conventional lithium secondary batteries have an energy density of 700 Wh/kg by using graphite as a negative electrode and using lithium cobalt oxide (LCO) as a positive electrode. However, as described above, in recent years, the fields requiring the lithium secondary battery with high energy density are expanding, and thus there is a continuing need to increase the energy density of the lithium secondary battery. For example, even in order to increase the mileage of an electric car by a single charge to 500 km or more, an increase in energy density is required.

In order to increase the energy density of a lithium secondary battery, the use of a lithium electrode comprising lithium metal is increasing. Specifically, there are advantages that lithium metal has not only a very high theoretical specific capacity of 3,860 mAh/g, but also has a very low standard hydrogen electrode (SHE) of -3.045 V, and thus enables the implementation of a battery with high capacity and high energy density.

However, there is a problem that since lithium metal is highly reactive and difficult to handle, it is difficult to handle in the process. In addition, when a lithium electrode is used as a negative electrode for a lithium secondary battery, lithium metal easily reacts with electrolyte, water, or impurities or lithium salt in the battery, etc. to form a solid electrolyte interface layer (SEI layer), which is a type of passivation layer, on the surface. Such a passivation layer causes localized current density differences to promote the formation of dendrites by lithium metal during charging, and the dendrites grow gradually during charging/discharging, thereby causing an internal short circuit between the positive electrode and the negative electrode. Also, the dendrite has a mechanically weak part (bottle neck), and thus forms inert lithium (dead lithium) which loses electrical contact with the current collector during discharging, thereby reducing the capacity of the battery, shortening the cycle lifetime, and adversely affecting the stability of the battery.

In order to improve the problems of the lithium electrode as described above, a lithium electrode in which a protective layer having various compositions or shapes is formed is being studied.

As an example, Korean Patent Publication No. 2018-0041086 relates to a protective layer formed by applying a slurry containing carbon fluoride or metal fluoride and PVdF-based resin to a lithium metal negative electrode. The lithium metal negative electrode on which the protective layer containing the above components is formed can prevent the formation of dendrites. However, there is a problem that the uniform distribution of lithium ions and the formation of an effective solid electrolyte interfacial layer on the surface of the negative electrode, which enable uniform plating and stripping of lithium metal during charging/discharging in order to improve the performance of the battery, are not smooth.

In addition, Korean Patent Publication No. 2016-0052351 discloses that by incorporating a lithium dendrite absorbing material into the polymer protective film formed on the surface of the lithium metal electrode, it is possible to suppress the growth of lithium dendrites, thereby improving the stability and lifetime characteristics of the lithium secondary battery. However, due to the polymer protective film, it is difficult to uniformly distribute lithium ions on the surface of the electrode, and it is difficult to apply it to a lithium-sulfur battery.

In addition, Qiuli Yang et al. and Gi Hyeon Moon et al. disclose that the formation of dendrites can be suppressed by forming a protective film on the lithium metal negative electrode using polymers of intrinsic microporosity (PIM) with intrinsic pores in the polymer structure, thereby uniformly distributing lithium ions on the surface of a lithium metal negative electrode. However, when the protective film formed on the lithium metal negative electrode comprises only a polymer having intrinsic porosity, since only the movement of lithium ions through the pores contained in the polymer having intrinsic porosity is possible, there is a problem that the conductivity to lithium ions is lowered, and a large overvoltage occurs during the charging/discharging process.

As described above, until now, several studies have been conducted on the development of a protective layer to prevent the growth of dendrites of lithium metal in a battery using a lithium electrode as a negative electrode. However, the results of studies on the protective layer that enable the improvement of the overall performance of the battery are insufficient. Therefore, there is still a need to develop a lithium electrode capable of realizing a lithium secondary battery with high capacity, high energy density, and long lifetime by preventing the formation of dendrites on the lithium electrode.

### [Prior Art Document]

### [Patent Document]

(Patent Document 1) Korean Patent Application Publication No. 2018-0041086 (April 23, 2018), An anode for a lithium ion secondary battery and a method for manufacturing the same
(Patent Document 2) Korean Patent Application Publication No. 2016-0052351 (May 12, 2016), Lithium metal electrode for lithium secondary battery with safe protective layer and lithium secondary battery comprising the same

### [Non-Patent Document]

(Non-Patent Document 1) Qiuli Yang et al., PIM-1 as an artificial solid electrolyte interphase for stable lithium metal anode in high-performance batteries, Journal of Energy Chemistry 2020, 42, 83-90
(Non-Patent Document 2) Gi Hyeon Moon et al., An artificial solid interphase with polymers of intrinsic microporosity for highly stable Li metal anodes, Chemical Communications 2019, 55, 6313-6316

EP 3 761 437 A1 discloses a lithium metal battery, wherein the anode is prepared by attaching a lithium metal foil onto a copper current collector. Hexagonal boron nitride flakes and an ionomer are mixed at a weight ratio of 9:1. This mixture is then added to polyvinylidene fluoride-co-hexafluoropropylene polymer to obtain a protective layer. The resultant protective layer is formed on lithium metal foil to obtain a negative electrode.

Journal of Energy Chemistry, vol. 42, pages 83-90, discloses a lithium metal battery, wherein the anode comprises a lithium metal foil coated by a protective layer comprising polymer of intrinsic porosity.

### [Disclosure]

### [Technical Problem]

Therefore, as a result of various studies conducted to solve the above problems, the inventors of the present invention have confirmed that when a protective layer including two-dimensional material and a polymer of intrinsic microporosity together is formed on the lithium electrode, the formation of dendrites may be prevented, and at the same time, excellent properties for the transport of lithium ions may be exhibited, and thus the performance of a battery comprising the same may be improved, and thus the inventors of the present invention have completed the present invention.

Therefore, it is an object of the present invention to provide a lithium electrode with a protective layer capable of suppressing the formation of dendrites and having transfer characteristics for lithium ions, thereby improving the lifetime characteristics of a lithium secondary battery.

In addition, it is another object of the present invention to provide a lithium secondary battery comprising the lithium electrode described above.

### [Technical Solution]

In order to achieve the above objects,
the present invention provides a lithium electrode comprising:
a lithium metal layer; and a protective layer formed on at least one surface of the lithium metal layer,
wherein the protective layer comprises a two-dimensional material and a polymer of intrinsic microporosity, wherein the two-dimensional material comprises at least one selected from the group consisting of graphene, graphene oxide, transition metal dichalcogenides, hexagonal boron nitride and graphitic carbon nitride.

In addition, the present invention provides a method for manufacturing a lithium electrode, the method comprising steps of:
(a) dispersing a two-dimensional material in a first solvent to prepare a first solution;
(b) dissolving a polymer of intrinsic microporosity in a second solvent to prepare a second solution;
(c) mixing the first solution and the second solution to prepare a coating solution; and
(d) applying the coating solution to at least one surface of a lithium metal layer.

In addition, the present invention provides a lithium secondary battery comprising the lithium electrode described above.

Further embodiments are disclosed in the dependent claims.

### [Advantageous Effects]

The protective layer according to the present invention comprises a two-dimensional material and a polymer of intrinsic microporosity, and thus is effective in preventing formation of dendrites, and may also exhibit excellent transfer characteristics for lithium ions, thereby increasing the lifetime of a lithium secondary battery comprising the same.

### [Description of Drawings]

FIG. 1 shows photographs showing the surfaces of lithium electrodes used in Examples 1 to 4 and Comparative Example 1 ((a): Example 1, (b): Example 2, (c): Example 3, (d): Example 4, and (e): Comparative Example 1).
FIG. 2 shows photographs of the surfaces of lithium electrodes according to Examples 1 to 4 taken with a scanning electron microscope.
FIG. 3 is a graph showing results of evaluation of life characteristics of lithium-sulfur batteries according to Experimental Example 2.
FIG. 4 is a graph showing results of evaluation of capacity retention rates of lithium-sulfur batteries according to Experimental Example 2.

### [Best Mode]

Hereinafter, the present invention will be described in more detail.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The terminology used herein is for the purpose of describing particular embodiments only and is not intended to be limiting of the invention. The singular forms "a," "an," and "the" include plural referents unless the context clearly dictates otherwise. It is to be understood that the terms "comprise" or "have" as used in the present specification, are intended to designate the presence of stated features, numbers, steps, operations, components, parts or combinations thereof, but not to preclude the possibility of the presence or addition of one or more other features, numbers, steps, operations, components, parts, or combinations thereof.

When a lithium electrode comprising lithium metal is used as a negative electrode for a lithium secondary battery, the following problems occur.

First, since lithium metal is highly reactive and has weak mechanical strength, it is difficult to handle.

Second, lithium metal reacts with electrolyte, water, or impurities or lithium salt in the battery, etc. to form a solid electrolyte interface layer (SEI layer), which is a passivation layer, on the surface of lithium metal. Such a solid electrolyte interface layer causes localized current density differences to form dendrites. In addition, the dendrites thus formed grow to cause an internal short circuit of the battery and form inactive lithium, thereby causing deterioration of the performance of the battery or an explosion phenomenon.

Third, when the positive electrode contains a sulfur-based material, there is a problem that lithium polysulfide (Li₂Sₓ, x = 8, 6, 4, 2) leached from the positive electrode causes a side reaction with lithium metal, and thus, as lithium sulfide (Li₂S) is adhered to the surface of lithium metal, thereby passivating the lithium electrode, the electrochemical reactivity of the lithium electrode is reduced.

In order to solve these problems, in the prior art, various materials were used to form a protective layer on lithium metal. However, the problem of generation of dendrites has not been effectively improved, and there is a problem that the capacity and lifetime characteristics of the battery as well as the operational stability are deteriorated.

Accordingly, the present invention provides a lithium electrode capable of implementing a lithium secondary battery having excellent capacity, lifespan and operational stability by forming a protective layer including a two-dimensional material and a polymer of intrinsic microporosity (PIM) on a surface of the lithium metal and thus preventing the formation of dendrites and improving transfer characteristics for lithium ions.

Specifically, the lithium electrode according to the present invention comprises a lithium metal layer; and a protective layer formed on at least one surface of the lithium metal layer, wherein the protective layer comprises a two-dimensional material and a polymer of intrinsic microporosity, wherein the two-dimensional material comprises at least one selected from the group consisting of graphene, graphene oxide, transition metal dichalcogenides, hexagonal boron nitride and graphitic carbon nitride.

In particular, the protective layer according to the present invention can suppress generation of dendrites and secure conductivity for lithium ions above a certain level, by comprising a polymer of intrinsic microporosity and a two-dimensional material together. Such polymer of intrinsic microporosity contains micropores therein, and thus it can provide a uniform channel for lithium ions. Accordingly, it is already known in the prior art to use it as a protective layer of a lithium electrode to suppress the growth of dendrites. However, in the case of the prior art, it is not possible to ensure a satisfactory preventing effect on the generation of dendrites, and also, if the protective layer of the lithium electrode comprises only the polymer of intrinsic microporosity, since only the movement of lithium ions through the micropores included in the polymer of intrinsic microporosity is possible, there was a problem that the conductivity for lithium ions of the lithium electrode itself is lowered, and thus a large overvoltage occurs during the charging/discharging process, thereby adversely affecting the overall performance of the battery. On the other hand, as described above, in the present invention, by introducing the protective layer comprising the polymer of intrinsic microporosity and the two-dimensional material on the lithium metal layer at the same time and thus uniformly distributing lithium ions on the lithium metal layer, it is possible to suppress formation of dendrites, to obtain excellent transport characteristics of lithium ions, and to improve capacity and lifetime characteristics of a lithium secondary battery comprising the same.

In the present invention, the lithium metal layer comprises lithium metal, and the lithium metal may comprise a thin film of lithium metal in the form of a foil or a sheet, or a powder of lithium metal in which lithium metal is aggregated in the form of particles. In addition, the lithium metal layer may be in the form of a lithium metal plate in which a thin film of lithium metal is formed on at least one surface of the current collector.

The current collector is for supporting the lithium metal layer, and is not particularly limited as long as it has high conductivity without causing chemical changes in the lithium secondary battery. For example, copper, stainless steel, aluminum, nickel, titanium, palladium, sintered carbon; copper or stainless steel surface-treated with carbon, nickel, or silver; aluminum-cadmium alloy may be used as the current collector.

The current collector can enhance the bonding force with lithium metal by having fine irregularities on its surface, and may be formed in various forms such as film, sheet, foil, mesh, net, porous body, foam, or nonwoven fabric.

A method of forming a thin film of lithium metal on the current collector is not particularly limited, and a method of forming a layer or a film commonly used in the art may be used. For example, a method such as pressing, coating, or vapor deposition may be used.

As described above, when the thin film of lithium metal, which is the lithium metal layer, is formed on one surface of the current collector, a protective layer, which will be described later, may be formed on the entire surface of the thin film of lithium metal except for the surface of the thin film of lithium metal in contact with the current collector.

In addition, when the current collector is a porous current collector, lithium metal may be comprised in the pores in the porous current collector. In this case, a protective layer, which will be described later, may be provided on the entire surface of the porous current collector except for the terminal connected to the porous current collector and extended to the outside.

A thickness of the lithium metal layer may be from 20 µm to 200 µm, preferably from 25 µm to 100 µm, and more preferably from 30 µm to 80 µm. If the thickness of the lithium metal layer is less than the range described above, the capacity and lifetime characteristics of the battery may be lowered. On the contrary, if the thickness of the lithium metal layer exceeds the range described above, the thickness of the lithium electrode may be thickened, which can be disadvantageous for commercialization.

In the present invention, the protective layer comprises a two-dimensional material and a polymer of intrinsic microporosity.

The two-dimensional material is a substance in which atoms have a single atomic thickness and form a crystal structure in a two-dimensional plane, and it has a shape of a plate, a flake, and a sheet having a thickness, and can be classified as a conductor, a semiconductor, and an insulator depending on the electrical properties. The two-dimensional material is a role in not only improving the transfer characters for lithium ions of the protective layer but also increasing the mechanical strength of the protective layer, by maximizing the Li ion transfer number of the protective layer formed on lithium metal.

The two-dimensional material comprises at least one selected from the group consisting of graphene, graphene oxide (GO), transition metal dichalcogenides, hexagonal boron nitride (h-BN) and graphitic carbon nitride (g-C3N4). The transition metal chalcogen compound is a compound having a two-dimensional layered structure consisting of a combination of a transition metal element such as tungsten (W) or molybdenum (Mo) and a chalcogen element such as sulfur (S), and specifically may be molybdenum disulfide (MoS₂), or tungsten disulfide (WS₂). Preferably, the two-dimensional material may include at least one selected from the group consisting of graphene oxide and graphitic carbon nitride.

The polymer of intrinsic microporosity (PIM) is a polymer that have a skeleton with a very rigid but twisted structure, and thus interfere with the arrangement of polymer chains through strong intermolecular interactions and form a free volume formed by linking functional groups, resulting in microporosity in the structure. Accordingly, the polymer of intrinsic microporosity comprises micropores of less than 2 nm, and have a very high specific surface area of 300 m²/g or more formed from these micropores.

As described above, as the polymer of intrinsic microporosity has a microporous structure, when applied as a protective layer of a lithium electrode, it forms a uniform channel for lithium ions to uniform current density distribution on the surface of the lithium metal layer, thereby suppressing the formation of dendrites.

Specifically, the polymer of intrinsic microporosity may be a polymer (PIM-1) comprising a repeating structure represented by Formula 1 below:

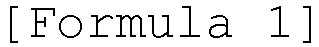

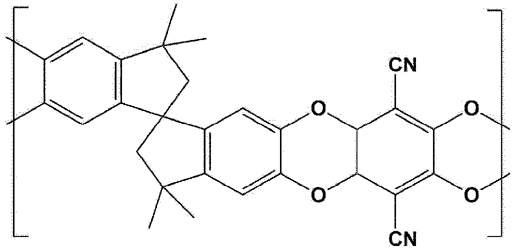

The weight average molecular weight (Mw) of the polymer (PIM-1) containing the repeating structure represented by Formula 1 may be 1,000 to 100,000 g/mol, preferably 3,000 to 60,000 g/mol, more preferably 5,000 to 50,000 g/mol.

In the protective layer, the two-dimensional material and the polymer of intrinsic microporosity may be contained in a weight ratio of 1:1 to 1:20, preferably 1:5 to 1:18, more preferably 1:7 to 1:12. In the present invention, the weight ratio corresponds to the ratio of "wt.% of two-dimensional material": "wt. % of polymer of intrinsic microporosity". If the weight ratio of the two-dimensional material and the polymer of intrinsic microporosity falls within the above-mentioned range, it is possible to exhibit excellent conductivity properties for lithium ions while having an excellent effect of inhibiting the formation of dendrites. If the weight ratio of the two-dimensional material and the polymer of intrinsic microporosity is less than the above range, an imbalance in the coating may occur and the performance of the battery may be reduced. On the contrary, if the weight ratio exceeds the above range, a problem of increasing resistance may occur.

The thickness of the protective layer may be from 0.1 to less than 5 µm, preferably from 0.2 to 3 µm, and more preferably from 0.5 to 1.5 µm. The protective layer may be formed with an appropriate thickness in consideration of the desired performance of the battery. If the thickness of the protective layer is less than the above range, there is a fear that the intended function as a protective layer cannot be performed. On the contrary, if the thickness exceeds the above range, the capacity of the battery is reduced due to overvoltage, and there may be a problem that the battery cannot be operated at a high rate.

The lithium-ion conductivity of the protective layer according to the present invention comprising the above-mentioned components may be in the range of from 10⁻²⁰ S/cm to 10⁻⁴ S/cm, preferably from 10⁻¹⁰ S/cm to 10⁻⁵ S/cm. The lithium electrode according to the present disclosure may exhibit superior conductive properties for lithium ions, by comprising the protective layer comprising the two-dimensional material and the polymer of intrinsic microporosity, as compared to a lithium electrode comprising a conventional protective layer made of the polymer of intrinsic microporosity only.

In addition, the surface resistance of the lithium electrode with the protective layer according to the present invention in an electrolyte is from 50 Ω to 300 Ω, preferably from 100 Ω to 200 Ω, more preferably from 120 Ω to 150 Ω, and there is no change in resistance for 1 to 72 hours, preferably 24 to 65 hours, more preferably 36 to 60 hours. This means that the protective layer containing the two-dimensional material and the polymers of intrinsic microporosity does not react with the electrolyte and is maintained in a stable state.

In the present invention, the manufacturing method of the lithium electrode is not particularly limited, and a method known by a person skilled in the art or various methods for modifying it can be used.

As an example, the manufacturing method of the lithium electrode comprises the steps of,
(a) dispersing the two-dimensional material in a first solvent to prepare a first solution;
(b) dissolving the polymer of intrinsic microporosity in a second solvent to prepare a second solution;
(c) mixing the first solution and the second solution to prepare a coating solution; and
(d) applying the coating solution to at least one surface of the lithium metal layer.

Specific examples of the two-dimensional material and the polymers of intrinsic microporosity are as described above.

The first solvent and the second solvent used in preparing the coating solution may be at least one selected from the group consisting of tetrahydrofuran (THF), toluene, cyclohexane, N-methyl-2-pyrrolidone (NMP), dimethyl formamide (DMF), dimethyl acetamide (DMAc), tetramethyl urea, dimethyl sulfoxide (DMSO) and triethyl phosphate. Since the solubility of the two-dimensional material and the polymers of intrinsic microporosity is high and it is advantageous to form a protective layer by the application process, it is preferable to use tetrahydrofuran as the first solvent and the second solvent.

The content of the first solvent and the second solvent may be a level having a concentration sufficient to facilitate coating, and the specific content varies depending on the application method and apparatus.

When preparing the first solution and the second solution, the contents of each of the two-dimensional material and the polymers of intrinsic microporosity are appropriately adjusted in consideration of their weight ratio in the above-described protective layer.

The method of applying the coating solution for forming the protective layer may be, but is not limited to, a method selected from the group consisting of dip coating, spray coating, spin coating, die coating, roll coating, slot-die coating, bar coating, gravure coating, comma coating, curtain coating and micro-gravure coating, and various application methods that can be used to form the coating layer in the art can be used.

After the application, a drying process for removing the solvent may be performed. The drying process is carried out at a temperature and time sufficient to sufficiently remove the solvent, and the conditions may vary depending on the type of solvent, so they are not particularly limited in the present invention. As an example, a drying method by warm air, hot air, or low humidity air, a vacuum drying method, or a drying method by irradiation of (far)-infrared rays and electron beams, etc. are mentioned. The drying rate is usually adjusted so that the solvent can be removed as quickly as possible within a speed range that does not cause cracks in the protective layer due to stress concentration or does not delaminate the lithium metal layer from the current collector.

The protective layer formed by the manufacturing method as described above may have a thickness of from 0.1 µm to 5 µm or less, preferably from 0.2 µm to 3 µm, more preferably from 0.5 µm to 1.5 µm. The protective layer can inhibit the formation of the formation of dendrites and improves the transport characteristics for lithium ions, thereby increasing the lifetime characteristics of a lithium secondary battery comprising the same.

In addition, the present invention provides a lithium secondary battery comprising the lithium electrode described above.

The lithium secondary battery comprises a positive electrode; a negative electrode; and an electrolyte interposed therebetween, wherein the negative electrode comprises the lithium electrode according to the present invention.

The positive electrode may comprise a positive electrode current collector and a positive electrode active material layer formed on one or both surfaces of the positive electrode current collector.

The positive electrode current collector is for supporting the positive electrode active material, as described above.

The positive electrode active material layer comprises a positive electrode active material, and may further comprise an electrically conductive material, a binder, or an additive.

The positive electrode active material is not particularly limited in its material as long as the positive electrode active material can be applied to a lithium secondary battery to reduce lithium ions during discharge and oxidize them during charging. For example, the positive electrode active material may be a transition metal oxide or a compound based on sulfur (S). Specifically, the positive electrode active material may include at least one of layered compounds such as lithium cobalt oxide (LiCoO₂) and lithium nickel oxide (LiNiO₂) or compounds substituted with one or more transition metals; lithium manganese oxides such as formula Li₁₊ₓMn₂₋ₓO₄ (0≤x≤0.33), LiMnO₃, LiMn₂O₃, and LiMnO₂; lithium copper oxide (Li₂CuO₂); vanadium oxides such as LiV₃O₈, V₂O₅, and Cu₂V₂O₇; Ni site type lithium nickel oxide represented by formula LiNi₁₋ₓMₓO₂ (wherein M = Co, Mn, Al, Cu, Fe, Mg, B or Ga; 0.01≤x≤0.3); lithium manganese composite oxides represented by formula LiMn₂₋ₓMₓO₂ (wherein M = Co, Ni, Fe, Cr, Zn or Ta; 0.01≤x≤0.1) or Li₂Mn₃MO₈ (wherein M = Fe, Co, Ni, Cu or Zn); lithium-manganese composite oxides of spinel structure represented by LiNiₓMn₂₋ₓO₄; LiCoPO₄; LiFePO₄; and elemental sulfur (S₈); compounds containing sulfur, such as Li₂Sn (n≥1), an organosulfur compound or a carbon-sulfur polymer ((C₂Sₓ)ₙ: x=2.5 ~ 50, n≥2).

If the positive electrode active material is a compound containing sulfur, the lithium secondary battery may be a lithium-sulfur battery.

In addition, if the positive electrode active material is elemental sulfur, it is used in combination with a conductive material such as a porous carbon material because it has no electrical conductivity alone. In this case, the positive electrode active material may be a sulfur-carbon composite.

The porous carbon material provides a framework capable of uniformly and stably immobilizing sulfur, which is a positive electrode active material, and supplements the low electrical conductivity of sulfur to enable the electrochemical reaction to proceed smoothly.

The porous carbon material may have a porous structure or a high specific surface area, and may be any material commonly used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT), and multiwall carbon nanotubes (MWCNT); carbon fibers such as graphite nanofiber (GNF), carbon nanofiber (CNF), and activated carbon fiber (ACF); and graphite such as natural graphite, artificial graphite, and expanded graphite, and activated carbon.

The sulfur-carbon composite may contain sulfur in an amount of 60 to 90 parts by weight, preferably 65 to 85 parts by weight, and more preferably 70 to 80 parts by weight, based on 100 parts by weight of sulfur-carbon composite. If the content of sulfur is less than the range above, as the content of the porous carbon material in the sulfur-carbon composite is relatively increased, the specific surface area is increased, and the content of the binder is increased in the manufacture of the positive electrode. An increase in the amount of such a binder may eventually increase the sheet resistance of the positive electrode and act as an insulator to block electron pass, thereby reducing the performance of the battery. On the contrary, if the content of the sulfur exceeds the above-mentioned range, sulfur that does not associate with the porous carbon material agglomerate with each other or are re-leached to the surface of the porous carbon material, and thus may be difficult to receive electrons, and cannot participate in an electrochemical reaction, resulting in a loss of capacity of the battery.

In addition, the sulfur in the sulfur-carbon composite is located on at least one of the inner and outer surfaces of the above-described porous carbon material, and in this case, may exist in an area of less than 100%, preferably 1 to 95%, more preferably 60 to 90% of the entire inner and outer surface of the porous carbon material. If sulfur as described above is present on the inner and outer surfaces of the porous carbon material within the above range, the maximum effect may be exhibited in terms of an electron transfer area and wettability with an electrolyte. Specifically, since sulfur is thinly and evenly impregnated on the inner and outer surfaces of the porous carbon material in the above range, the electron transfer contact area can be increased during the charging/discharging process. If sulfur is located in an area of 100% of the entire inner and outer surface of the porous carbon material, since the carbon material is completely covered with sulfur, wettability to electrolyte is reduced, and contact with the electrically conductive material comprised in the electrode is lowered, so that it cannot receive electron transfer and thus cannot participate in the electrochemical reaction.

The preparation method of the sulfur-carbon composite is not particularly limited in the present invention, and a method commonly used in the art may be used. As an example, a method of simply mixing sulfur and the porous carbon material and then heat-treating them to form a composite may be used.

The positive electrode active material may be contained in an amount of 40 to 95% by weight, preferably 50 to 90% by weight, more preferably 60 to 85% by weight, based on 100% by weight of the total weight of the positive electrode active material layer constituting the positive electrode. If the content of the positive electrode active material is less than the above range, it is difficult for the electrode to sufficiently exhibit an electrochemical reaction. On the contrary, if the content of the positive electrode active material exceeds the above range, there is a problem that the content of the electrically conductive material and the binder, which will be described later, is relatively insufficient, and thus the resistance of the positive electrode is increased, and the physical properties of the positive electrode are deteriorated.

The positive electrode active material layer may optionally further comprise an electrically conductive material for smoothly moving electrons in the positive electrode and a binder for well adhering the positive electrode active material to the current collector.

The electrically conductive material is a material that electrically connects the electrolyte and the positive electrode active material to serve as a path for electrons to move from the current collector to the positive electrode active material, which may be used without limitation as long as it has electrical conductivity.

For example, as the electrically conductive material, graphite such as natural graphite and artificial graphite; carbon black such as Super-P, Denka black, acetylene black, Ketjen black, channel black, furnace black, lamp black, thermal black and carbon black; carbon derivatives such as carbon nanotubes and fullerene; electrically conductive fibers such as carbon fiber and metal fiber; carbon fluoride; metal powders such as aluminum and nickel powder; or electrically conductive polymers such as polyaniline, polythiophene, polyacetylene, and polypyrrole may be used alone or in combination.

The electrically conductive material may be contained in an amount of 0.01 to 30% by weight, based on 100% by weight of the total weight of the positive electrode active material layer. If the content of the electrically conductive material is less than the above range, it is difficult to transfer electrons between the positive electrode active material and the current collector, thereby reducing voltage and capacity. On the contrary, if the content of the electrically conductive material exceeds the above range, the proportion of the positive electrode active material may be reduced, so that the total energy (charge amount) of the battery may be reduced. Therefore, it is preferable that the content of the electrically conductive material is determined to be an appropriate content within the above-described range.

The binder maintains the positive electrode active material in the positive electrode current collector, and organically connects between the positive electrode active materials to further increase the bonding force between them, and any binder known in the art can be used as the binder.

For example, the binder may be fluororesin-based binders comprising polyvinylidene fluoride (PVdF) or polytetrafluoroethylene (PTFE); rubber-based binders comprising styrene butadiene rubber (SBR), acrylonitrile-butadiene rubber, and styrene-isoprene rubber; cellulose-based binders comprising carboxymethylcellulose (CMC), starch, hydroxy propyl cellulose, and regenerated cellulose; polyalcohol-based binders; polyolefin-based binders comprising polyethylene and polypropylene; polyimide-based binders; polyester-based binders; and silane-based binders, or mixtures or copolymers of two or more thereof.

The binder may be contained in an amount of 0.5 to 30 parts by weight based on 100 % by weight of the total weight of the positive electrode active material layer. If the content of the binder is less than the above range, the physical properties of the positive electrode may be deteriorated, and thus the positive electrode active material, the additive and the electrically conductive material in the positive electrode may be detached. If the content exceeds the above range, since the ratio of positive electrode active material and electrically conductive material in the positive electrode is relatively reduced, the capacity of the battery may be reduced. Therefore, it is preferable that the content is appropriately determined within the above-described range.

In the present invention, the method for manufacturing the positive electrode for the lithium-sulfur battery is not particularly limited, and a method known by a person skilled in the art or a variety of modified methods thereof can be used.

For example, the positive electrode for the lithium-sulfur battery may be manufactured by preparing a slurry composition for a positive electrode comprising the above-described components, and then applying it to at least one surface of the positive electrode current collector and thus forming the positive electrode active material layer.

The slurry composition for the positive electrode comprises the positive electrode active material, electrically conductive material, binder, and additive as described above, and in addition, may comprises a solvent.

As a solvent, a solvent capable of uniformly dispersing the positive electrode active material, the additive, the electrically conductive material and the binder is used. As such a solvent, water is most preferred as an aqueous solvent. At this time, water may be a distilled water or a distilled water, but is not necessarily limited thereto, and if necessary, a lower alcohol which can be easily mixed with water may be used. Examples of the lower alcohol may comprise methanol, ethanol, propanol, isopropanol, and butanol. Preferably, they can be used in admixture with water.

The content of the solvent may be contained at a level of having such a concentration as to facilitate the coating, and the specific content varies depending on the coating method and apparatus.

The slurry composition for the positive electrode may additionally comprise, if necessary, a material commonly used for the purpose of improving its function in the relevant technical field. For example, a viscosity adjusting agent, a fluidizing agent, a filler, etc. may be mentioned.

The method of applying the slurry composition for the positive electrode is not particularly limited in the present invention, and for example, methods such as doctor blade, die casting, comma coating, and screen printing may be mentioned. In addition, after molding on a separate substrate, the slurry composition for the positive electrode may be applied on the positive electrode current collector by pressing or lamination.

After the application, a drying process for removing the solvent may be performed. The drying process is carried out at a temperature and time at a level capable of sufficiently removing the solvent, and the conditions may vary depending on the type of solvent, and thus are not particularly limited in the present invention. As an example, a drying method by warm air, hot air, or low-humidity air, a vacuum drying method, and a drying method by irradiation with (far)-infrared radiation or electron beam may be mentioned. The drying speed is adjusted so that the solvent can be removed as quickly as possible within the range of speed that does not cause cracks in the positive electrode active material layer due to normal stress concentration or within the range of speed at which the positive electrode active material layer does not peel off from the positive electrode current collector.

Additionally, after the drying, the density of the positive electrode active material in the positive electrode may be increased by pressing the current collector. Methods, such as a mold press and a roll press, are mentioned as a press method.

The porosity of the positive electrode, specifically, the positive electrode active material layer, prepared by the components and manufacturing method as described above may be 50 to 80%, preferably 60 to 75%. If the porosity of the positive electrode is less than 50%, there are problems that the degree of filling of the slurry composition for the positive electrode containing the positive electrode active material, the electrically conductive material and the binder is too high, and thus the sufficient electrolyte capable of exhibiting ionic conduction and/or electrical conduction between the positive electrode active materials cannot be maintained, so that the output characteristics or cycle characteristics of the battery may be deteriorated and the overvoltage of the battery and the decrease in discharging capacity become serious. On the contrary, if the porosity of the positive electrode exceeds 80% and thus has an excessively high porosity, there are problems that the physical and electrical connection with the current collector is lowered, reducing adhesion and making reaction difficult and that the increased porosity is filled with the electrolyte, which may lower the energy density of the battery. Therefore, the porosity of the positive electrode is properly adjusted within the above range.

In addition, the loading amount of sulfur in the positive electrode according to the present invention, that is, the mass of sulfur per unit area in the positive electrode active material layer in the positive electrode may be 0.5 to 15 mg/cm², preferably 1 to 10 mg/cm².

The negative electrode is as described above.

The electrolyte is located between the positive electrode and the negative electrode as described above to cause an electrochemical oxidation or reduction reaction at the positive electrode and the negative electrode through this, and comprises a lithium salt and a non-aqueous organic solvent.

The lithium salt may be used without limitation as long as it can be commonly used in a lithium secondary battery.

Specific examples of the lithium salt may be at least one from the group consisting of LiCl, LiBr, LiI, LiClO₄ LiBF₄, LiB₁₀Cl₁₀, LiPF₆, LiCF₃SO₃, LiCF₃CO₂, LiC₄BO₈, LiAsF₆, LiSbF₆, LiAlCl₄, LiSO₃CH₃, LiSO₃CF₃, LiSCN, LiC(CF₃SO₂)₃, LiN(CF₃SO₂)₂(lithium bis(trifluoromethanesulfonyl)imide; LiTFSI), LiN(C₂F₅SO₂)₂, LiN(SO₂F)₂(lithium bis(fluorosulfonyl)imide; LiFSI), lithium chloroborane, lithium lower aliphatic carboxylate, lithium tetraphenyl borate, and lithium imide.

The concentration of the lithium salt may be 0.2 to 4 M, specifically 0.6 to 2 M, more specifically 0.7 to 1.7 M depending on various factors such as the composition of the electrolyte, the solubility of the lithium salt, the conductivity of the dissolved lithium salt, the charging and discharging conditions of the battery, the operating temperature, and other factors known in the field of the lithium secondary battery. If the concentration of the lithium salt is less than 0.2 M, the conductivity of the electrolyte may be lowered and thus the performance of the electrolyte may be deteriorated. If the concentration of the lithium salt exceeds 4 M, the viscosity of the electrolyte may increase and thus the mobility of the lithium ions may be reduced.

As the non-aqueous organic solvent, those commonly used in an electrolyte for a lithium secondary battery may be used without limitation. For example, as the non-aqueous organic solvent, ethers, esters, amides, linear carbonates, cyclic carbonates, etc. may be used alone or in combination of two or more thereof. Among them, an ether-based compound may be typically used.

The ether-based compound may comprise an acyclic ether and a cyclic ether.

For example, the acyclic ether may be, but is not limited to, at least one selected from the group consisting of dimethyl ether, diethyl ether, dipropyl ether, methylethyl ether, methylpropyl ether, ethylpropyl ether, dimethoxyethane, diethoxyethane, ethylene glycol ethylmethyl ether, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, and polyethylene glycol methylethyl ether.

For example, the cyclic ether may be, but is not limited to, at least one selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, and isosorbide dimethyl ether.

The ester compound may be, but is not limited to, at least one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone, and ε-caprolactone, and a mixture of two or more thereof.

Specific examples of the linear carbonate compound may representatively comprise, but is not limited to, at least one selected from the group consisting of dimethyl carbonate (DMC), diethyl carbonate (DEC), dipropyl carbonate, ethylmethyl carbonate (EMC), methylpropyl carbonate, and ethylpropyl carbonate, or a mixture of two or more thereof.

In addition, specific examples of the cyclic carbonate compound may comprise at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof, or a mixture of two or more thereof. Examples of such halides include, but are not limited to, fluoroethylene carbonate (FEC).

In addition, in addition to the above-mentioned non-aqueous organic solvent, it comprises at least one selected from the group consisting of N-methylpyrrolidone, dimethyl sulfoxide, sulfolane furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl) furan, thiophene, 2-methylthiophene, 2-ethylthiophene, 2-propylthiophene, 2-butylthiophene, 2,3-dimethylthiophene, 2,4-dimethylthiophene, and 2,5-dimethylthiophene.

The electrolyte may further comprise nitric acid-based compounds commonly used in the related art in addition to the above-mentioned components. Examples thereof may comprise lithium nitrate (LiNO₃), potassium nitrate (KNO₃), cesium nitrate (CsNO₃), magnesium nitrate (Mg(NO₃)₂), barium nitrate (Ba(NO₃)₂), lithium nitrite (LiNO₂), potassium nitrite (KNO₂), and cesium nitrite (CsNO₂).

The injection of the electrolyte can be performed at an appropriate stage during the manufacturing process of the battery, depending on the manufacturing process and the required properties of the final product. That is, the injection can be applied before the assembly of the battery or at the final stage of the assembly of the battery.

A separator may be additionally comprised between the positive electrode and the negative electrode.

The separator separates or insulates the positive electrode and the negative electrode from each other and enables lithium ions to be transported between the positive electrode and the negative electrode, and may be made of a porous non-conductive or insulating material. The separator may be used without particular limitation as long as it is used as a separator in a typical lithium secondary battery. The separator may be an independent member such as a film or a coating layer added to the positive electrode and/or the negative electrode.

As the separator, a separator with excellent impregnating ability for the electrolyte along with low resistance to ion migration in the electrolyte is preferable.

The separator may be made of a porous substrate. Any of the porous substrates can be used as long as it is a porous substrate commonly used in a secondary battery. A porous polymer film may be used alone or in the form of a laminate. For example, a non-woven fabric made of high melting point glass fibers, or polyethylene terephthalate fibers, etc. or a polyolefin-based porous membrane may be used, but is not limited thereto.

The material of the porous substrate is not particularly limited in the present invention, and any material can be used as long as it is a porous substrate commonly used in an electrochemical device. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), and polyarylate.

The thickness of the porous substrate is not particularly limited, but may be 1 to 100 µm, preferably 5 to 50 µm. Although the thickness range of the porous substrate is not particularly limited to the above-mentioned range, if the thickness is excessively thinner than the lower limit described above, mechanical properties are deteriorated and thus the separator may be easily damaged during use of the battery.

The average diameter and porosity of the pores present in the porous substrate are also not particularly limited, but may be 0.001 µm to 50 µm and 10 to 95%, respectively.

The lithium secondary battery of the present invention can be classified into cylindrical, rectangular, coin-shaped, and pouch type depending on the shape, and can be divided into bulk type and thin film type depending on the size. The structure and preparation method of these batteries are well known in the art, and thus detailed description thereof is omitted.

Also, the present invention provides a battery module comprising the lithium secondary battery described above as a unit battery.

The battery module may be used as a power source for medium- to large-sized devices requiring high temperature stability, long cycle characteristics, and high-capacity characteristics.

Examples of the medium- to large-sized devices may comprise, but are not limited to, a power tool that is powered by a battery powered motor; electric cars comprising an electric vehicle (EV), a hybrid electric vehicle (HEV), and a plug-in hybrid electric vehicle (PHEV); an electric motorcycle comprising an electric bike (E-bike) and an electric scooter (E-scooter); an electric golf cart; and a power storage system.

Hereinafter, preferred examples of the present invention will be described in order to facilitate understanding of the present invention.

### Example and Comparative Example

### [Example 1]

### (1) Manufacture of lithium electrode

In one reactor, 0.1 g of hexagonal boron nitride was dispersed in 100 mℓ of tetrahydrofuran using an ultrasonic dispersion device to prepare a first solution.

In another reactor, 1.0 g of PIM-1 (Mw: 10,000 g/mol) was dissolved in 50 ml of tetrahydrofuran to prepare a second solution.

The first solution and the second solution prepared by the above method were mixed to prepare a coating solution for forming a protective layer

The coating solution was applied to the surface of a lithium metal layer with a thickness of 30 µm using a bar coating process, and then, dried in a vacuum oven at 80°C for 12 hours to prepare a lithium electrode comprising a protective layer having a thickness of 0.5 µm. At this time, the weight ratio of the hexagonal boron nitride and PIM-1 contained in the protective layer was 1:10.

### (2) Manufacture of lithium-sulfur battery

90% by weight of sulfur-carbon composite (S:C=75:25 (weight ratio)) as a positive electrode active material, 5.0% by weight of Denka black as an electrically conductive material, and 5.0 % by weight of styrene butadiene rubber/carboxymethyl cellulose (SBR:CMC=70:30 (weight ratio)) as a binder were mixed to prepare a slurry composition for a positive electrode.

The prepared slurry composition for the positive electrode was applied on an aluminum current collector with a thickness of 20 µm, dried at 50°C for 12 hours, and compressed with a roll press machine, to prepare a positive electrode. At this time, the loading amount of the positive electrode active material was 5.4 mAh/cm² or less, and the porosity of the positive electrode was 68%.

The prepared positive electrode was positioned to face the lithium electrode (negative electrode) prepared in (1) above, and a polyethylene separator having a thickness of 20 µm and a porosity of 68% was interposed therebetween, and then, 0.1 mℓ of electrolyte was injected to prepare a lithium-sulfur battery.

At this time, as the electrolyte, a mixed solution obtained by dissolving 1M concentration of lithium bis(trifluoromethanesulfonyl)imide (LiTFSI) and 1% by weight of lithium nitrate (LiNO₃) in an organic solvent consisting of 1,3-dioxolane and dimethyl ether (DOL:DME=1:1 (volume ratio)) was used.

### [Example 2]

A lithium-sulfur battery was prepared in the same manner as in Example 1 above, except that when preparing the first solution, 0.1 g of molybdenum disulfide was used instead of 0.1 g of hexagonal boron nitride, and thus the weight ratio of molybdenum disulfide and PIM-1 contained in the protective layer is 1:10.

### [Example 3]

A lithium-sulfur battery was prepared in the same manner as in Example 1 above, except that when preparing the first solution, 0.1 g of graphene oxide was used instead of 0.1 g of hexagonal boron nitride, and thus the weight ratio of graphene oxide and PIM-1 contained in the protective layer is 1:10.

### [Example 4]

A lithium-sulfur battery was prepared in the same manner as in Example 1 above, except that when preparing the first solution, 0.1 g of graphitic carbon nitride was used instead of 0.1 g of hexagonal boron nitride, and thus the weight ratio of graphitic carbon nitride and PIM-1 contained in the protective layer is 1:10.

### [Comparative Example 1]

A lithium-sulfur battery was prepared in the same manner as in Example 1 above, except that a thin film of lithium metal with a thickness of 30 µm without a protective layer is used as a negative electrode.

### [Comparative Example 2]

A lithium-sulfur battery was prepared in the same manner as in Example 1 above, except that a solution prepared by dissolving 1.0 g of PIM-1 (Mw: 10,000 g/mol) in 50 mℓ of tetrahydrofuran is used as a coating solution for forming a protective layer, and thus a lithium electrode having a protective layer containing only PIM-1 is used.

### [Comparative Example 3]

A lithium-sulfur battery was prepared in the same manner as in Example 1 above, except that, a solution prepared by dissolving 0.1 g of hexagonal boron nitride and 1.0 g of a polyvinylidene fluoride-hexafluoropropylene (PVDF-co-HFP) polymer in 150 mℓ of tetrahydrofuran is used as a coating solution for forming a protective layer, and thus a lithium electrode with a protective layer formed using such a solution is used.

### Experimental Example 1. Evaluation of surface of lithium electrode

The surfaces of the lithium electrodes prepared in Examples 1 to 4 and the thin film of lithium metal in Comparative Example 1 were observed with the naked eye and with a scanning electron microscope (SEM). In this case, S-4800 manufactured by Hitachi company was used as a scanning electron microscope, and the results obtained are shown in FIGs. 1 and 2.

As shown in FIG. 1, in the case of the lithium electrodes according to Examples 1 to 4, it can be confirmed that by including the polymers of intrinsic microporosity, a yellowish coating layer is formed, as compared to Comparative Example 1.

Also, referring to FIG. 2, it can be confirmed that the two-dimensional material and the polymers of intrinsic microporosity coated in a film form are together on the surface of the lithium metal layer.

### Experimental Example 2. Evaluation of battery performance

The batteries manufactured by Examples and Comparative Examples were evaluated for performance using a charging/discharging measuring device (Model name: LAND CT-2001A, Manufacturer: product of Wuhan company).

Specifically, after repeating the processes of discharging to 1.8 V at a current density of 0.1 C, and charging to 2.5 V at a current density of 0.1 C at 25°C for 3 cycles, and then charging and discharging in the same voltage section at a current density of 0.2 C for 3 cycles, the capacity and lifetime characteristics of the battery were evaluated while discharging at a current density of 0.5 C and charging at a current density of 0.3 C was performed. The results obtained at this time are shown in Table 1 and FIGs. 3 and 4.

**Table 1:**

| | Capacity retention rate (% @ 70 cycles) |
|---|---|
| Example 1 | 85 |
| Example 2 | 84 |
| Example 3 | 95 |
| Example 4 | 87 |
| Comparative Example 1 | 80 |
| Comparative Example 2 | 81 |
| Comparative Example 3 | 79 |

As shown in FIGs. 3 and 4 and Table 1, it can be seen that in the case of the batteries according to Examples, the lifetime characteristics are superior to those of Comparative Examples.

FIGs. 3 and 4, it can be seen that in the case of the batteries according to Comparative Examples 1 to 3, the discharging capacities are relatively low, and the capacity retention rates, i.e., the lifetime characteristics are also poor, as compared to the batteries according to Examples 1 to 4.

In particular, referring to FIG. 4 and Table 1, it can be seen that Comparative Example 2 is a case in which a protective layer is formed on a lithium metal layer using only PIM-1 which is the polymers of intrinsic microporosity, and it has a lower discharging capacity than Comparative Example 1 without a protective layer and its capacity retention rate is also similar to that of Comparative Example 1. From this, it can be seen that in order to improve the capacity and lifetime characteristics of the battery, the protective layer of the lithium electrode should comprise both the polymers of intrinsic microporosity and the two-dimensional material. In addition, it can be confirmed that in the case of Examples 3 and 4, since the capacity retention rate was superior to that of Examples 1 and 2, graphene oxide and graphitic carbon nitride as the two-dimensional material are effective in improving the lifetime characteristics of the battery.

## Claims

1. A lithium electrode comprising:
a lithium metal layer;
and a protective layer formed on at least one surface of the lithium metal layer,
wherein the protective layer comprises two-dimensional material and a polymer of intrinsic microporosity, wherein the two-dimensional material comprises at least one selected from the group consisting of graphene, graphene oxide, transition metal dichalcogenides, hexagonal boron nitride and graphitic carbon nitride.

2. The lithium electrode according to claim 1, wherein the two-dimensional material comprises at least one selected from the group consisting of graphene, graphene oxide, molybdenum disulfide, hexagonal boron nitride, and graphitic carbon nitride.

3. The lithium electrode according to claim 2, wherein the two-dimensional material comprises at least one selected from the group consisting of graphene oxide and graphitic carbon nitride.

4. The lithium electrode according to claim 1, wherein the polymer of intrinsic microporosity comprises a repeating structure represented by Formula 1 below:

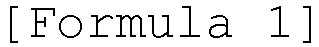

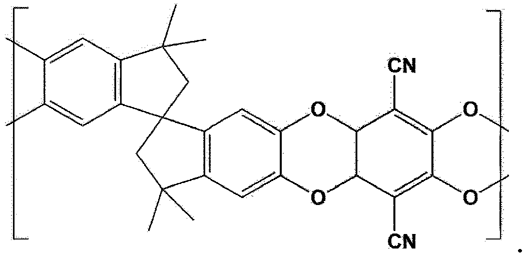

5. The lithium electrode according to claim 1, wherein a weight ratio of the two-dimensional material and the polymers of intrinsic microporosity is 1:1 to 1:20.

6. The lithium electrode according to claim 1, wherein a thickness of the protective layer is from 0. 1µm to less than 5 µm.

7. The lithium electrode according to claim 1, wherein a thickness of the lithium metal layer is from 20 µm to 200 µm.

8. A method for manufacturing the lithium electrode of claim 1, the method comprising:
(a) dispersing the two-dimensional material in a first solvent to prepare a first solution;
(b) dissolving the polymer of intrinsic microporosity in a second solvent to prepare a second solution;
(c) mixing the first solution and the second solution to prepare a coating solution; and
(d) applying the coating solution to at least one surface of a lithium metal layer.

9. The method for manufacturing the lithium electrode according to claim 8, wherein the first solvent and the second solvent are the same or different, and comprise at least one selected from the group consisting of tetrahydrofuran, toluene, cyclohexane, N-methyl-2-pyrrolidone, dimethyl formamide, dimethyl acetamide, tetramethyl urea, dimethyl sulfoxide, and triethyl phosphate.

10. A lithium secondary battery comprising:
a positive electrode comprising a positive electrode active material; a negative electrode comprising the lithium electrode according to claim 1; and an electrolyte interposed between the positive electrode and the negative electrode.

11. The lithium secondary battery according to claim 10, wherein the positive electrode active material comprises a compound containing sulfur.

12. The lithium secondary battery according to claim 10, wherein the lithium secondary battery is a lithium-sulfur battery.

## Patentansprüche

1. Lithiumelektrode, umfassend:
eine Lithiummetallschicht;
und eine Schutzschicht, die auf mindestens einer Oberfläche der Lithiummetallschicht gebildet ist,
wobei die Schutzschicht zweidimensionales Material und ein Polymer mit intrinsischer Mikroporosität umfasst, wobei das zweidimensionale Material mindestens eines umfasst, das aus der Gruppe ausgewählt ist, die aus Graphen, Graphenoxid, Übergangsmetalldichalkogeniden, hexagonalem Bornitrid und graphitischem Kohlenstoffnitrid besteht.

2. Lithiumelektrode nach Anspruch 1, wobei das zweidimensionale Material mindestens eines umfasst, das aus der Gruppe ausgewählt ist, die aus Graphen, Graphenoxid, Molybdändisulfid, hexagonalem Bornitrid und graphitischem Kohlenstoffnitrid besteht.

3. Lithiumelektrode nach Anspruch 2, wobei das zweidimensionale Material mindestens eines umfasst, das aus der Gruppe ausgewählt ist, die aus Graphenoxid und graphitischem Kohlenstoffnitrid besteht.

4. Lithiumelektrode nach Anspruch 1, wobei das Polymer mit intrinsischer Mikroporosität eine Wiederholungsstruktur umfasst, die durch die nachstehende Formel 1 dargestellt ist:

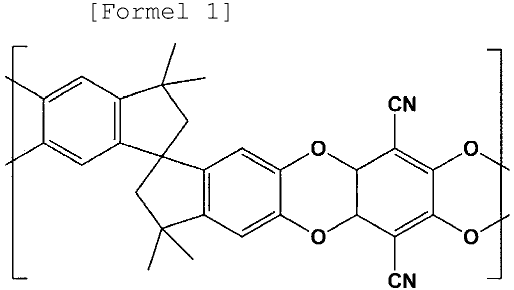

5. Lithiumelektrode nach Anspruch 1, wobei ein Gewichtsverhältnis des zweidimensionalen Materials und der Polymere mit intrinsischer Mikroporosität 1:1 bis 1:20 beträgt.

6. Lithiumelektrode nach Anspruch 1, wobei eine Dicke der Schutzschicht von 0,1 µm bis weniger als 5 µm beträgt.

7. Lithiumelektrode nach Anspruch 1, wobei eine Dicke der Lithiummetallschicht von 20 µm bis 200 µm beträgt.

8. Verfahren zur Herstellung der Lithiumelektrode nach Anspruch 1, wobei das Verfahren umfasst:
(a) Dispergieren des zweidimensionalen Materials in einem ersten Lösungsmittel, um eine erste Lösung herzustellen;
(b) Auflösen des Polymers mit intrinsischer Mikroporosität in einem zweiten Lösungsmittel, um eine zweite Lösung herzustellen;
(c) Mischen der ersten Lösung und der zweiten Lösung, um eine Beschichtungslösung herzustellen; und
(d) Aufbringen der Beschichtungslösung auf mindestens eine Oberfläche einer Lithiummetallschicht.

9. Verfahren zur Herstellung der Lithiumelektrode nach Anspruch 8, wobei das erste Lösungsmittel und das zweite Lösungsmittel gleich oder verschieden sind und mindestens eines umfassen, das aus der Gruppe ausgewählt ist, die aus Tetrahydrofuran, Toluol, Cyclohexan, N-Methyl-2-pyrrolidon, Dimethylformamid, Dimethylacetamid, Tetramethylharnstoff, Dimethylsulfoxid und Triethylphosphat besteht.

10. Lithiumsekundärbatterie, umfassend:
eine positive Elektrode, umfassend ein aktives Material der positiven Elektrode; eine negative Elektrode, umfassend die Lithiumelektrode nach Anspruch 1; und einen Elektrolyten, der zwischen der positiven Elektrode und der negativen Elektrode angeordnet ist.

11. Lithiumsekundärbatterie nach Anspruch 10, wobei das aktive Material der positiven Elektrode eine schwefelhaltige Verbindung umfasst.

12. Lithiumsekundärbatterie nach Anspruch 10, wobei die Lithiumsekundärbatterie eine Lithium-Schwefel-Batterie ist.

## Revendications

1. Électrode au lithium comprenant :
une couche de métal lithium ; et
une couche protectrice formée sur au moins une surface de la couche de métal lithium,
dans laquelle la couche protectrice comprend un matériau bidimensionnel et un polymère de microporosité intrinsèque, dans laquelle le matériau bidimensionnel comprend un ou plusieurs éléments sélectionnés dans le groupe constitué de graphène, oxyde de graphène, dichalcogénures de métaux de transition, nitrure de bore hexagonal et nitrure de carbone graphitique.

2. Électrode au lithium selon la revendication 1, dans laquelle le matériau bidimensionnel comprend un ou plusieurs éléments sélectionnés dans le groupe constitué de graphène, oxyde de graphène, disulfure de molybdène, nitrure de bore hexagonal et nitrure de carbone graphitique.

3. Électrode au lithium selon la revendication 2, dans laquelle le matériau bidimensionnel comprend un ou plusieurs éléments sélectionnés dans le groupe constitué d'oxyde de graphène et de nitrure de carbone graphitique.

4. Électrode au lithium selon la revendication 1, dans laquelle le polymère de microporosité intrinsèque comprend une structure de répétition représentée par la Formule 1 ci-dessous :

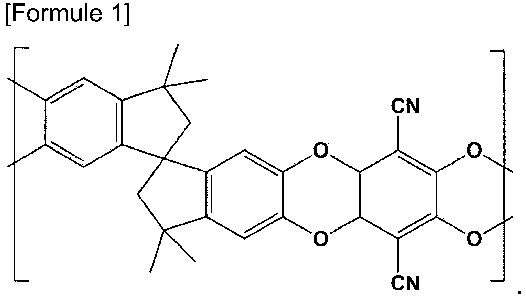

5. Électrode au lithium selon la revendication 1, dans laquelle un rapport en poids du matériau bidimensionnel et des polymères de microporosité intrinsèque est 1:1 à 1:20.

6. Électrode au lithium selon la revendication 1, dans laquelle une épaisseur de la couche protectrice est de 0,1 µm à moins de 5 µm.

7. Électrode au lithium selon la revendication 1, dans laquelle une épaisseur de la couche de métal lithium est de 20 µm to 200 µm.

8. Procédé de fabrication de l'électrode au lithium selon la revendication 1, le procédé consistant à :
(a) disperser le matériau bidimensionnel dans un premier solvant pour préparer une première solution ;
(b) dissoudre le polymère de microporosité intrinsèque dans un deuxième solvant pour préparer une deuxième solution ;
(c) mélanger la première solution et la deuxième solution pour préparer une solution de revêtement ; et
(d) appliquer la solution de revêtement à au moins une surface d'une couche de métal lithium.

9. Procédé de fabrication de l'électrode au lithium selon la revendication 8, dans lequel le premier solvant et le deuxième solvant sont identiques ou différents, et comprennent un ou plusieurs éléments sélectionnés dans le groupe constitué de tétrahydrofurane, toluène, cyclohexane, N-méthyl-2-pyrrolidone, formamide de diméthyle, acétamide de diméthyle, urée de tétraméthyle, sulfoxyde de diméthyle et phosphate de triéthyle.

10. Batterie rechargeable au lithium comprenant :
une électrode positive comprenant un matériau actif d'électrode positive ;
une électrode négative comprenant l'électrode au lithium selon la revendication 1 ; et
un électrolyte interposé entre l'électrode positive et l'électrode négative.

11. Batterie rechargeable au lithium selon la revendication 10, dans laquelle le matériau actif d'électrode positive comprend un composé contenant du soufre.

12. Batterie rechargeable au lithium selon la revendication 10, dans laquelle la batterie rechargeable au lithium est une batterie au lithium-soufre.
